# EUROPEAN PATENT APPLICATION

(11) **EP 4 174 544 A1**
(43) Date of publication of application: **03.05.2023**
(21) Application number: 22203114.8
(22) Date of filing: 21.10.2022
(51) Int. Cl.: G02B 6/44

(54) **FIBER ROUTING GUIDE**

(30) Priority: 28.10.2021 US 202163272715 P
(71) Applicant: Corning Research & Development Corporation, Corning, New York 14831 (US)
(72) Inventor: KLAK, Robert Tomasz, 98220 Zdunska Wola (PL); NAUDIN, Thierry, 44700 Orvault (FR); RUDA, Michal, 95-060 Brzeziny (PL); WALCZAK, Grzegorz Maciej, 91-747 Lodzkie (PL)
(74) Representative: Reeve, Nicholas Edward

(57) **Abstract**

A device for guiding a fiber optic drop cable from a splice tray is provided herein. The device includes a body extending from an entry end to an exit end and defining a channel therebetween. The body comprises an entry surface, wherein the entry surface is curved defining a decreasing diameter from the entry end into the channel. The body further comprises an exit surface, wherein the exit surface is curved defining an increasing diameter from the channel to the exit end. The body further comprises at least one cut-out within the body that enables feeding of the drop cable therethrough into the channel. The body is configured to receive the fiber optic drop cable from the splice tray and to maintain a minimum bending radius of the fiber optic drop cable between the splice tray and the exit end, wherein the minimum bending radius corresponds to a change of direction of the fiber optic drop cable below 90°.

## Description

### PRIORITY APPLICATION

This application claims the benefit of priority of U.S. Provisional Application No. 63/272,715, filed on October 28, 2021, the content of which is relied upon and incorporated herein by reference in its entirety.

### FIELD OF THE INVENTION

Embodiments of the present invention relate generally to enclosures housing fiber optic cables, and more particularly to routing fiber optic drop cables from splice trays to an exit of the enclosure to provide lifespan enhancing features.

### BACKGROUND OF THE INVENTION

Telecommunication cables are used for distributing all manner of data across vast networks. A telecommunication cable typically includes a bundle of individual telecommunication lines (e.g., optical fibers or copper wires) that are encased within a protective sheath. As telecommunication cables are routed across data networks, it is necessary to periodically open the cable so that one or more telecommunication lines therein may be spliced, thereby allowing data to be distributed to other cables or "branches" of the telecommunication network. The cable branches may be further distributed until the network reaches individual homes, businesses, offices, premises, and so on.

To provide improved performance to subscribers, fiber optic networks are increasingly providing optical fiber connectivity directly to the subscribers. As part of various fiber-to-the-premises ("FTTP"), fiber-to-the-home ("FTTH"), and other initiatives (generally described as "FTTx"), such fiber optic networks are providing the optical signals from distribution cables through local convergence points ("LCPs") to fiber optic cables, such as drop cables, that are run directly to the subscribers' premises. Such optical connectivity is increasingly being provided to single family units ("SFU") and to multiple dwelling units ("MDUs") in part because of the relatively large density of subscribers located in an MDU.

MDUs include apartments, condominiums, townhouses, dormitories, hotels/motels, office buildings, factories, and any other collection of subscriber locations that are in relatively close proximity to one another. MDUs typically are all provided in a single indoor environment, such as an office or condominium; however, MDUs may also include a plurality of individual structures, such as apartment complexes. Typically, if an MDU comprises multiple structures, the optical fibers extending between the structures are adapted for outdoor environments, whereas the optical fibers extending within the structures are adapted for indoor environments. Most conventional MDUs include an LCP located in a generally central and selectively accessible location, such as the basement, utility closet, or the like, or the LCP may be located outside the MDU on an exterior wall, in a pedestal, in a handhole, or the like. The LCP includes at least one fiber optic cable that optically connects to a distribution cable. The LCP also includes a connection point where the subscriber cables routed through the building are optically connected to the distribution cable.

Conventional LCPs for such MDUs are generally sized according to the number of subscribers to be serviced through the LCP, and many of the high density MDUs require large, expensive LCPs that may be difficult to install and/or transport. In addition, conventional LCPs often require skilled technicians to install the LCP and route the associated subscriber cables. Furthermore, highly skilled technicians are required to optically connect, often by splicing, the distribution cable to the LCP and to optically connect and route the subscriber cables to the LCP. Therefore, a need exists for LCPs that are cost-effective, are relatively small in size, and may be installed and maintained by relatively unskilled technicians.

With the increased deployment speed and rate in MDU/SFU areas, the quantity of maintainers doing installations has increased. The greater number of maintainers leads to MDU/SFU terminals being in need of providing additional security levels to address/eliminate potential failures on the product coming from low-skilled technicians, or potential mistakes generated by faulty maintenance or unauthorized access to components.

Furthermore, there exists a need to provide general technicians access to the cables for maintenance, and installations, while preventing unnecessary access to other cables in order to prevent improper access or installations by unauthorized providers.

Additionally, as the convergence points include additional splice trays, there exists a need to adequately supply and remove the cables to and from the trays, to maintain an optimal and/or minimum bend radius to provide effective communications via the fibers.

### BRIEF SUMMARY OF THE INVENTION

Various embodiments of the present invention address the above needs and achieve other advantages by providing a separation between access to the splice trays within a fiber optic patch enclosure (e.g., at an LCP), such as by distinguishing the outside plant ("OSP") and the inside plant ("ISP") trays, and who may have access to the fibers within the trays.

In an example embodiment, feeder and branch cables are routed into the enclosure and placed within the OSP splice trays which are different than the ISP trays. In some embodiments, the lower splice trays may be used by the OSP and blocked by a device to separate them from the upper trays, which may be available for use by an ISP. Accordingly, some embodiments provide such a device that is installed on one or more sides of the trays. The number of splice trays blocked by the device(s) may vary based on the desired configuration, and the device may be so configurable to enable different access configurations. In some embodiments, two (2) trays may be blocked, while in other embodiments up to seven (7) trays may be blocked. The blocked splice trays may not be accessed except by authorized personnel or maintainers.

In some embodiments, drop cables are routed from the enclosure, including from some of the upper splice trays (e.g., the ISP splice trays). Therefore, some embodiments provide one or more fiber routing guides such that the drop cables may be guided from a respective tray to an opening within the base so as to maintain a minimum bend radius of the fiber to prevent damage to the fiber and maintain effective data transfer therethrough.

In an embodiment of the present invention a fiber optic enclosure is provided. The fiber optic enclosure includes at least one splice tray within the fiber optic enclosure. The fiber optic enclosure further includes at least one device fixed within the enclosure. The at least one device comprises a body extending from an entry end to an exit end and defining a channel therebetween. The body comprises an entry surface. The entry surface may be curved defining a decreasing diameter from the entry end into the channel. The body further comprises an exit surface. The exit surface is curved defining an increasing diameter from the channel to the exit end. The body further comprises at least one cut-out within the body that enables feeding of the drop cable therethrough into the channel. The enclosure further comprises at least one drop cable extending from the at least one splice tray. A portion of the drop cable is positioned within the channel of the device maintaining a minimum bending radius of the at least one drop cable between the at least one tray and an exit of the enclosure. The minimum bending radius corresponds to a change of direction of the at least one drop cable below 90 degrees.

In some embodiments, the enclosure further comprises a base disposed below the exit end. The base comprises a platform extending perpendicular to the channel. The platform has at least one attachment feature configured to engage with a bottom surface of the enclosure.

In some embodiments, the at least one tray within the enclosure is a plurality of trays rotatably secured on a ramp. In some embodiments the at least one device within the enclosure is a first device and a second device. The first device is positioned on a first side of at least one tray, and the second device is positioned on a second side of the at least one tray.

In some embodiments, the entry surface is a first entry surface and a second entry surface. The first entry surface and the second entry surface are symmetrical about a channel axis extending between the entry end and the exit end.

In some embodiments, the cut-outs of the device define a smooth pathway that includes no right angles.

In another embodiment, a device for guiding a fiber optic drop cable from a splice tray is provided. The device comprises a body extending from an entry end to an exit end and defining a channel therebetween. The body of the device includes an entry surface. The entry surface is curved defining a decreasing diameter from the entry end into the channel. The body further includes an exit surface. The exit surface is curved defining an increasing diameter from the channel to the exit end. The body further includes at least one cut-out that enables feeding of the fiber optic drop cable therethrough into the channel. The device is configured to provide and maintain a minimum bending radius of the at least one drop cable between the splice tray and an exit. In some embodiments, the device further includes a base disposed the exit end. The base comprises a platform extending perpendicular to the channel. The platform comprises at least one attachment feature. In some embodiments, the at least one attachment feature is a protrusion on the bottom side of the platform. In some embodiments, the at least one attachment feature is at least one hole configured to engage with a fastener.

In some embodiments, the channel has a constant diameter. In some embodiments, the at least one cut-out extends from the entry end to the exit end. In some embodiments, the at least one cut-out is configured such that the fiber optic drop cable is retained within the channel from the entry end to the exit end. In some embodiments, the channel comprises an upper cut-out and a lower cut-out wherein the upper cut-out and the lower cut-out have different configurations. In some embodiments, the lower cut-out is asymmetrical about a channel axis extending between the entry end and the exit end.

In some embodiments, the channel defines a central portion between the entry end and the exit end. The central portion is open. The body further comprises a middle surface extending into the central portion of the channel. The middle surface is curved defining a decreasing diameter between a middle end of the middle surface into the channel.

In some embodiments, the entry surface is a first entry surface and a second entry surface. Each of the first entry surface and the second entry surface are convex relative to the channel.

In some embodiments, the exit surface is a first exit surface and a second exit surface. Each of the first exit surface and the second exit surface are convex relative to the channel.

In some embodiments, the device is injection molded.

In yet another example embodiment a method for using a guide device within a fiber optic enclosure is provided. The method comprises routing at least one drop cable from a splice tray to the guide device. The guide device comprises a body extending from an entry end to an exit end and defining a channel therebetween. The body comprises an entry surface. The entry surface may be curved defining a decreasing diameter from the entry end into the channel. The body further comprises an exit surface. The exit surface is curved defining an increasing diameter from the channel to the exit end. The body further comprises at least one cut-out within the body that enables feeding of the drop cable therethrough into the channel. The method continues by maneuvering the at least one drop cable through the channel via the cut-out from the entry to the exit end.

In some embodiments, maneuvering the drop cable comprises, maintaining a minimum bending radius of the at least one drop cable. The minimum bending radius corresponds to a change of direction of the at least one drop cable below 90 degrees.

### BRIEF DESCRIPTION OF THE DRAWINGS

Having thus described the invention in general terms, reference will now be made to the accompanying drawings, which are not necessarily drawn to scale, and wherein:
FIG. 1 illustrates a schematic diagram of an exemplary FTTx network, in accordance with some embodiments discussed herein;
FIG. 2A illustrates an example convergence point enclosure (e.g., a fiber optic patch enclosure) in a closed state, in accordance with some embodiments discussed herein;
FIG. 2B illustrates the example convergence point enclosure in an open state, in accordance with some embodiment discussed herein;
FIG. 2C illustrates the example convergence point enclosure in an open state with the example splice trays removed, in accordance with some embodiments discussed herein;
FIG. 2D illustrates the example convergence point enclosure in an open state, in accordance with some embodiments discussed herein;
FIGS. 3A-3B illustrate perspective views of an example splice tray blocker device, in accordance with some embodiments discussed herein;
FIG. 3C illustrates a side view of a portion of the example splice tray blocker device, in accordance with some embodiments discussed herein;
FIG. 3D illustrates a top view of a portion of the example splice tray blocker device, in accordance with some embodiments discussed herein;
FIG. 3E illustrates a side perspective view of a portion of the example splice tray blocker device, in accordance with some embodiments discussed herein;
FIG. 4A illustrates a perspective view of an example splice tray blocker device within an example enclosure, in accordance with some embodiments discussed herein;
FIG. 4B illustrates a top view of the example splice tray blocker device within the enclosure, in accordance with some embodiments discussed herein;
FIG. 5 illustrates an example attachment feature of an example splice tray blocker device, in accordance with some embodiments discussed herein;
FIG. 6A illustrates a top perspective view of an example splice tray blocker device, in an engaged position, in accordance with some embodiments discussed herein;
FIG. 6B illustrates a perspective view of the example splice tray blocker device, in a disengaged position, in accordance with some embodiments discussed herein;
FIG. 6C illustrates a side view of the example splice tray blocker device, in a disengaged position, in accordance with some embodiments discussed herein;
FIG. 6D illustrates a perspective view of the example splice tray blocker device, in a disengaged position within an example enclosure, in accordance with some embodiments discussed herein;
FIG. 6E illustrates a top view of the example splice tray blocker device in an engaged position and in a disengaged position, in accordance with some embodiments discussed herein;
FIG. 7A illustrates a top view of a portion of an example enclosure, in accordance with some embodiments discussed herein;
FIG. 7B illustrates a side view of a portion of the example enclosure, in accordance with some embodiments discussed herein;
FIG. 7C illustrates a side view of a portion of the example enclosure, in accordance with some embodiments discussed herein;
FIG. 8A illustrates a portion of an example enclosure having splice tray blocker devices in the disengaged position, in accordance with some embodiments discussed herein;
FIG. 8B illustrates a portion of the example enclosure and splice tray blocker devices in the engaged position, in accordance with some embodiments discussed herein;
FIG. 9 illustrates an example enclosure having an example fiber routing vertical guide, in accordance with some embodiments discussed herein;
FIG. 10A illustrates a front view of an example fiber routing vertical guide, in accordance with some embodiments discussed herein;
FIG. 10B illustrates a cross-sectional view of the example fiber routing vertical guide, in accordance with some embodiments discussed herein;
FIGS. 10C-10D illustrate perspective views of the example fiber routing vertical guide, in accordance with some embodiments discussed herein;
FIG. 10E illustrates a cross-sectional view of another example fiber routing vertical guide, in accordance with some embodiments discussed herein;

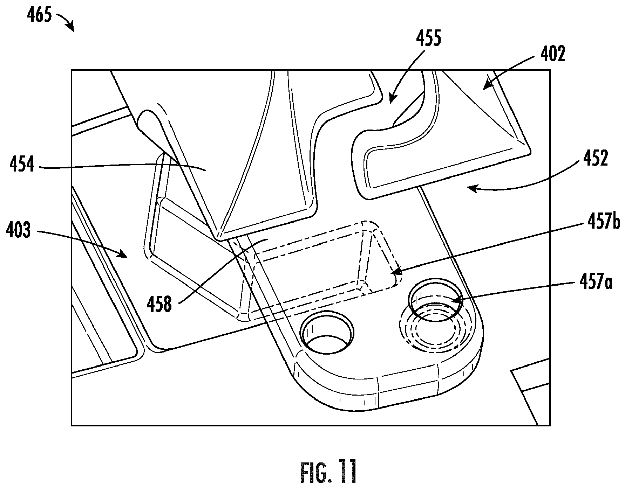

FIG. 11 illustrates a partially transparent view of an example fiber routing vertical guide engaged with an enclosure, in accordance with some embodiments discussed herein;
FIG. 12 illustrates an example enclosure with an example fiber routing vertical guide, in accordance with some embodiments discussed herein; and
FIGS. 13-15 illustrate block diagrams of example methods in accordance with some embodiments discussed herein.

### DETAILED DESCRIPTION

Example embodiments of the present invention now will be described more fully hereinafter with reference to the accompanying drawings, in which some, but not all embodiments of the invention are shown. Indeed, the invention may be embodied in many different forms and should not be construed as limited to the example embodiments set forth herein; rather, these embodiments are provided so that this disclosure will satisfy applicable legal requirements. Like reference numerals refer to like elements throughout.

The term "Outside Plant" ("OSP") as used herein is defined as the cables or providers prior to the cables being spliced in a fiber optic patch enclosure. The term "inside plant" ("ISP") as used herein is defined as the point at which the cables are being spliced and redirected to the consumer.

The term "vertical" as used herein may refer to generally up and down (e.g., perpendicular) with respect to a plane corresponding to the base of the enclosure. The term "horizontal" as used herein may refer to generally left, right, forward, and backward (e.g., parallel) with respect to a plane corresponding to the base of the enclosure. To the extent a specific direction (e.g., up, down, side, etc.) is used, such terms are meant for explanatory purposes and are not designed to be limited to the specifically termed direction. In this regard, other directions are contemplated, such as based on different frames of reference.

Optical fibers are useful in a wide variety of applications, including the telecommunications industry for voice, video, and data transmissions. The benefits of optical fibers are well known and include higher signal-to-noise ratios and increased bandwidth compared to conventional copper-based transmission technologies. To meet modern demands for increased bandwidth and improved performance, telecommunication networks are increasingly providing optical fiber connectivity closer to end subscribers. These initiatives include fiber-to-the-node (FTTN), fiber-to-the-premises (FTTP), fiber-to-the-home (FTTH), and the like (generally described as FTTx).

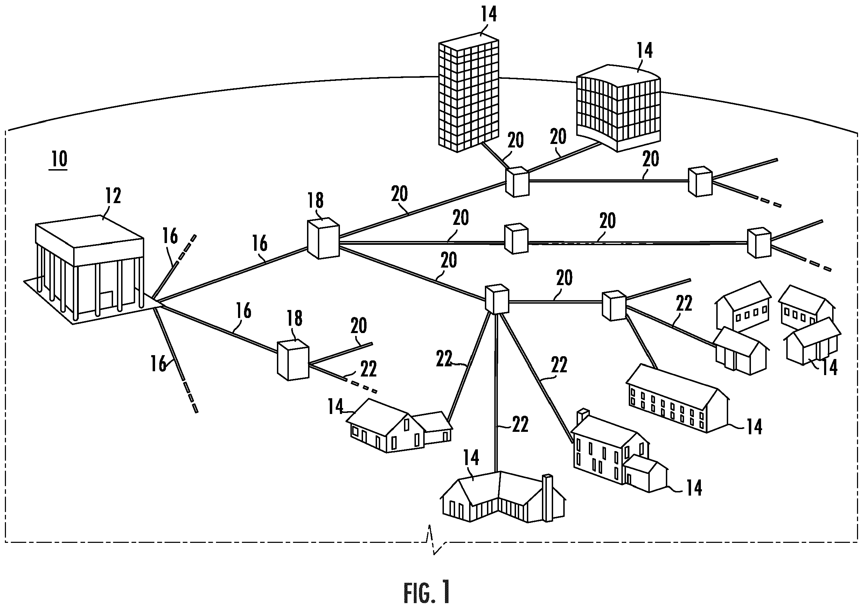

In an FTTx network, fiber optic cables are used to carry optical signals to various distribution points and, in some cases, all the way to end subscribers. For example, FIG. 1 is a schematic diagram of an exemplary FTTx network 10 that distributes optical signals generated at a switching point 12 (e.g., a central office of a network provider) to subscriber premises 14. Optical line terminals (OLTs; not shown) at the switching point 12 convert electrical signals to optical signals. Fiber optic feeder cables 16 then carry the optical signals to various local convergence points 18, which act as locations for splicing and making cross-connections and interconnections. The local convergence points 18 often include splitters to enable any given optical fiber in the fiber optic feeder cable 16 to serve multiple subscriber premises 14. As a result, the optical signals are "branched out" from the optical fibers of the fiber optic feeder cables 16 to optical fibers of distribution cables 20 that exit the local convergence points 18.

At network access points closer to the subscriber premises 14, some or all of the optical fibers in the distribution cables 20 may be accessed to connect to one or more subscriber premises 14. Drop cables 22 extend from the network access points to the subscriber premises 14, which may be single-dwelling units (SDU), multi-dwelling units (MDU), businesses, and/or other facilities or buildings. A conversion of optical signals back to electrical signals may occur at the network access points or at the subscriber premises 14.

There are many different network architectures, and the various tasks required to distribute optical signals (e.g., splitting, splicing, routing, connecting subscribers) can occur at several locations. Regardless of whether a location is considered a switching point, local convergence point, network access point, subscriber premise, or something else, fiber optic equipment is used to house components that carry out one or more of the tasks. The fiber optic equipment may be assemblies that include drawers or trays to facilitate the tasks.

Although an FTTx network 10 is shown in FIG. 1, the same considerations apply with respect to other types of telecommunication networks or environments, such data centers and other enterprise network environments. Like switching points (central offices), data centers may include fiber optic equipment having drawers or trays. In some cases, subscriber premises 14 may have one or more SDUs or MDUs having drawers, trays, or modules (and fiber optic patch enclosures that house such drawers, trays, or modules).

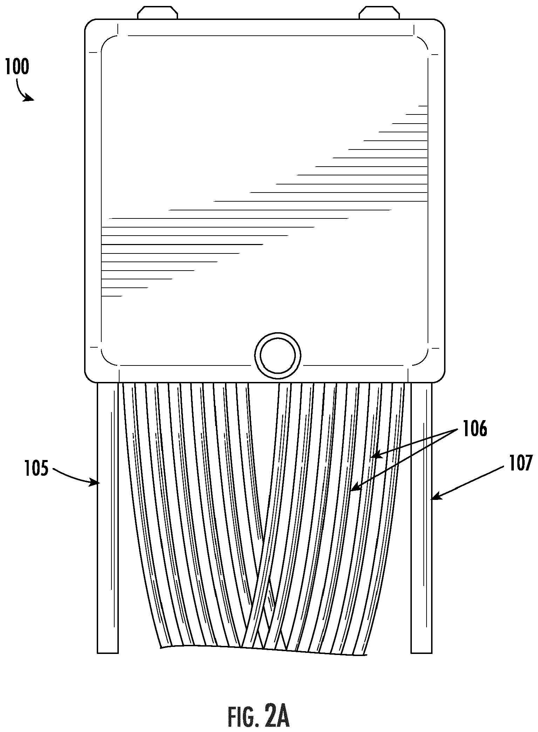

A patch enclosure for MDUs and/or various SFUs may bring in one or more cables and distribute the cables throughout the MDUs and/or SFUs. An example enclosure 100 housing one or more splice trays is illustrated in FIG. 2A. In some embodiments, the enclosure 100 may have an inlet for incoming cable 105, and an outlet for the at least one drop cable 106. In some embodiments, the enclosure may also have an outlet, for an outgoing cable 107. The outgoing cable 107 may continue to another enclosure for a room, dwelling, or other premise. The enclosure 100 may be substantially symmetrical, providing an opening for an incoming cable or outgoing cable on both a first side and a second side of the enclosure.

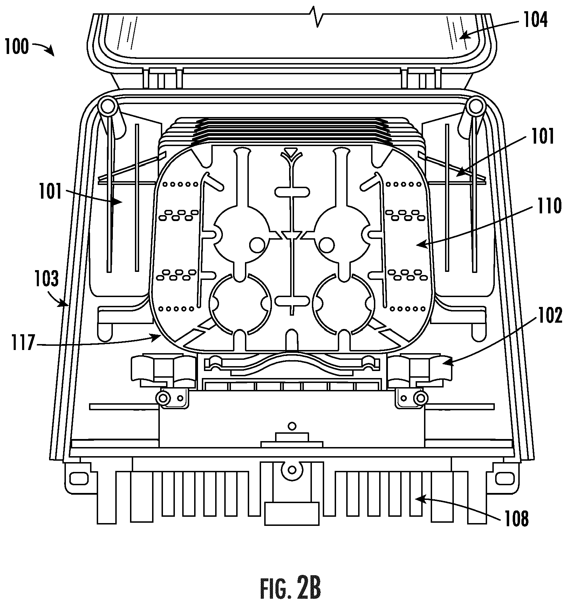

The contents within the interior of the enclosure may also be substantially symmetrical. FIG. 2B illustrates the enclosure 100 in an open state. In the open state, the lid 104 has been disengaged from the base 103. The lid 104 and base 103 may be hingedly attached, so as to rotate about a hinge between an open state and a closed state. As used herein the closed state refers to the lid 104 and base 103 being fully engaged, wherein the open state refers to any state other than the closed state. In other embodiments, the lid 104 and base 103 may be configured to have a snap together feature, or other means of one component receiving or inserting into the other (skirt, snap, etc.).

The base 103 may be shaped to receive and organize cables, splice trays, and other features. The base 103 may include a series of openings 108 along one of the walls. Two of the openings 108 may be configured for the incoming feeder cable 105 and the outgoing distribution cable 107. The openings 108 may further include a plurality of guides extending between the inlet and outlet. Some of the plurality of openings 108 may each direct an individual drop cable. In some embodiments, there may be up to 8, up to 12, or up to 24 drop cable openings. In some embodiments, there may be at least 8, at least 12 or at least 24 drop cable openings to provide cables throughout a premise and/or to multiple premises.

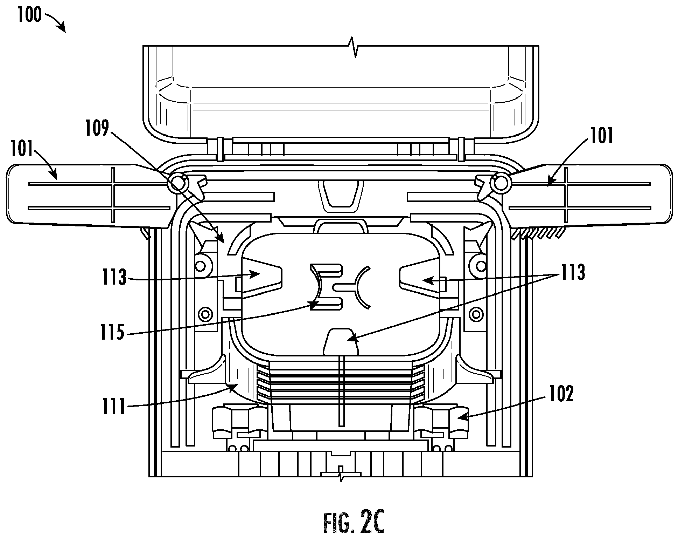

In some embodiments, the enclosure 100 may house a plurality of splice trays 110, with each splice tray being relatively spaced vertically apart from one another. In some embodiments, the splice trays 110 maybe be engaged with a ramp 111, see FIG. 2C, which spaces the splice trays 110 horizontally (as well as vertically) such that the center points of the plurality of splice trays 110 are not vertically aligned. In some embodiments, an edge of the lowest splice tray 110 may be adjacent to a wall of the base 103 and the top splice tray may be spaced apart for the walls of the base 103. In some embodiments, the enclosure 100 may further include at least one tray blocker device 101 attached thereto, such as to an internal management plate 109, see FIG. 2C. The tray blocker device 101 may be configured to engage and disengage from at least one of the plurality of splice trays 110.

The enclosure 100 may further include at least one guide device 102 disposed near the ramp 111 and the openings for the drop cables. The guide device 102 may be configured to receive at least one drop cable from one of the plurality of splice trays 110.

As mentioned above, an internal management plate 109 may be positioned and secured within the enclosure 100. As illustrated in FIG. 2C, the internal management plate 109 may be positioned within the base 103. The internal management plate 109 may include routing features to receive and route incoming and outgoing cables. In some embodiments, the internal management plate 109 may include a surface disposed on the bottom face of the base 103. The surface may be centered below the bottom splice tray 110. The surface may receive, store and redirected cables within the enclosure 100. In some embodiments, the surface may include exterior holders 113, and interior holders 115. The exterior holders 113 may be configured to secure and organize cable slack contained within the enclosure 100. The interior holders 115 may be configured such that cables may be rerouted by changing direction or orientation of the cable within the enclosure 100 while maintaining a desired minimum bend radius. Accordingly, a cable may be rerouted to be directed towards an available splice tray 110.

As discussed above, a ramp 111 may be contained within the base 103 of the enclosure 100. The ramp 111 may be attached to the internal management plate 109. In some embodiments, the ramp 111 may extend diagonally upwards from the contact edge with the internal management plate 109. The ramp 111 may include a plurality of fittings, wherein each of the plurality of fittings is configured to receive and retain a splice tray 110. Each of the plurality of splice trays 110 may be rotatable between a resting (e.g., horizontal) position and a spaced apart (e.g., vertical) position about the fitting of the ramp 111. Notably, any degree of movement between the resting position and spaced apart position is contemplated. The ramp fittings are configured such that each of the plurality of splice trays 110 may be rotated from the horizontal position to the vertical position without colliding with one another. In some embodiments, each of the splice trays 110 may include a cover. The cover may be configured to retain the contents of the splice tray 110 within the splice tray 110. In some embodiments, the cover may be removable.

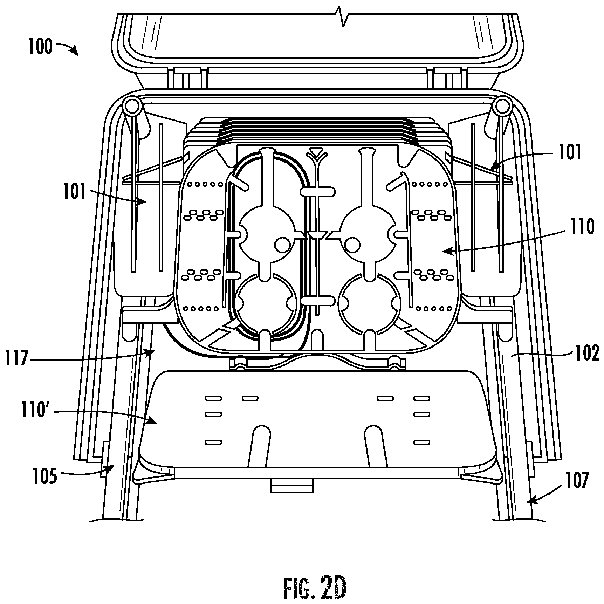

As illustrated in FIG. 2D, one of the plurality of splice trays 110' is rotated into the spaced apart (vertical) position, while the other splice trays 110 remain in the resting (horizontal) position. Rotating a spice tray 110 from the horizontal position to the vertical position enables an operator or servicer to access the splice tray 110 below. In some embodiments, the cables enter and exit the splice tray 110 on the side with the fitting of the ramp 111, thereby allowing rotation of the splice tray 110 without impeding the splices or the fibers entering into the splice tray 110.

As the deployment speed and desired rate of fiber optics in MFU/SFU areas increase more terminals may be deployed, and thereby more security and features needed to prevent product failures and/or tampering by unauthorized personal. The tray blocker device 101, and the guide device 102 are configured to assist with these issues, as detailed below.

### Tray Blocker Device

As discussed above, there is a need to differentiate accessibility to various splice trays 110 by allowing access to authorized splice trays, while preventing access to unauthorized splice trays by a group of users or maintainers. Various example splice tray blocker devices, e.g. "tray blocker devices" detailed herein provide a customizable device to provide physical splice tray separation. The tray blocker device may be configured to be moveable between an engaged and disengaged position to restrict access to splice trays, and to provide authorized users with access to the restricted splice trays. In some embodiments, the tray blocker device may be injection molded, thus enabling customization and interchangeability at a low material and production cost.

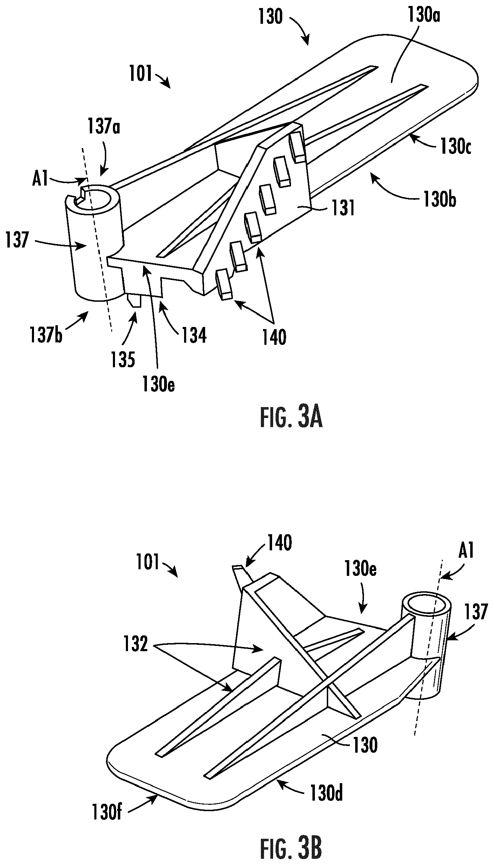

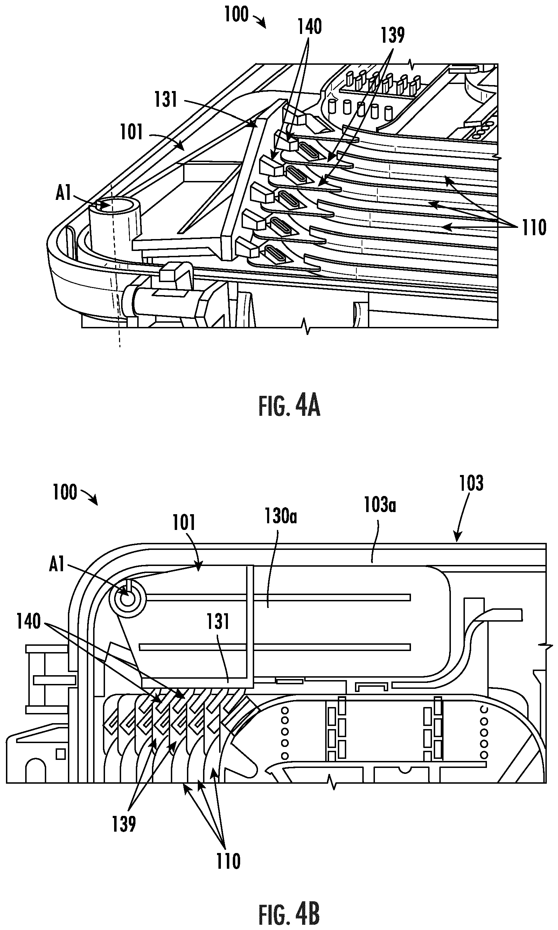

The tray blocker device 101 as illustrated in FIG. 3A includes a body 130 formed as an elongated surface. In some embodiments, the body 130 may be configured extend along the length of one of the splice trays 110, when in an engaged position. In some embodiments, the body 130 has a thickness extending vertically, such that, when in the engaged position, the top surface 130a of the body 130 is flush with a top surface 103a of the base 103, as illustrated in FIG. 4B, and the bottom surface 130b of the body 130 is below the top surface 103a of the base 103.

The body 130 may have an interior edge 130c an exterior edge 130d, a proximal edge 130e, and a distal edge 130f. The interior edge 130c and the exterior edge 130d may be substantially parallel to one another. The distal edge 130f may be formed perpendicular to, or substantially perpendicular to both the interior edge 130c and the exterior edge 130d. In some embodiments, the proximal edge 130e and the distal edge 130f are not parallel, wherein the interior edge 130c and the proximal edge 130e may form an obtuse angle of attachment. In some embodiments, the interior and exterior edges 130c, 130d may be substantially longer than the proximal edge 130e and/or distal edge 130f. In some embodiments, the exterior edge 130d may include a proximal side portion which deviates from parallel to the interior edge 130c. In some embodiments, such as illustrated in FIG. 3B, the proximal side portion may skew inward to an attachment feature 137.

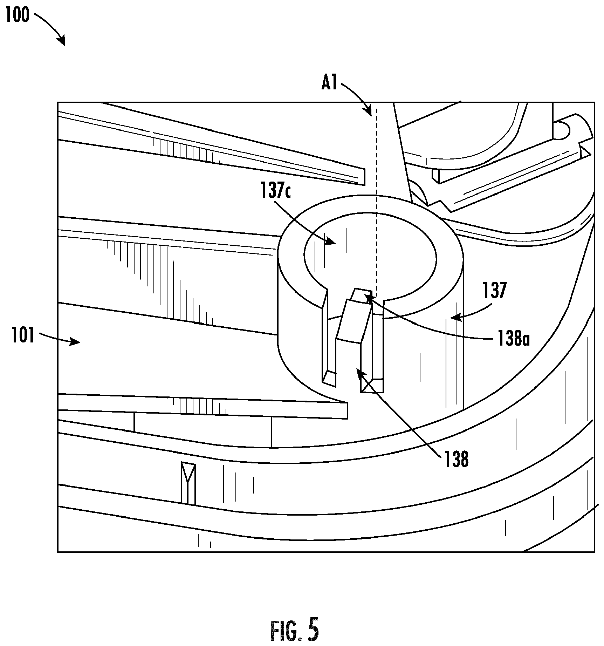

In some embodiments, the attachment feature 137 may be formed as a cylinder configured to receive a fastener. The attachment feature 137 may define a top opening 137a and a bottom opening 137b, defining a rotation axis A1 extending therebetween. In some embodiments, the fastener may be configured to be inserted into the top opening 137a and secure the body 130 to the base 103 through the bottom opening 137b. In some embodiments, the attachment feature 137 may include a retaining feature 138, see FIG. 5, that includes a projection 138a that extends into the top opening 137a such that the fastener may be retained within the attachment feature 137 (e.g., the fastener inside the attachment feature 137 cannot be removed past the projection 138a although there may be sufficient vertical space that enables rotation of the tray blocker device 101 while still preventing full removal of the tray blocker device 101 from the base 103). The fastener may be a screw, a nut and bolt, or other device to fasten the tray blocker device 101 within the enclosure such that the tray blocker device 101 can rotate about the rotation axis A1 between an engaged position and a disengaged position. Other configurations of the attachment feature 137 are contemplated, including without limitation a cylindrical extension having one or more tabs that engage an aperture in the base 103, or other suitable rotationally enabled connection configurations.

The body 130 may further comprise a lower wall 134 extending vertically below the proximal edge 130e. The lower wall 134 may extend from the attachment feature 137. In some embodiments, the lower wall 134 extends from the attachment feature 137 partially across the proximal edge 130e of the body 130. The lower wall 134 may be configured as an extension of the proximal edge 130e. In some embodiments, the lower wall 134 may descend from the lower surface 130b of the body parallel to the proximal edge 130e. In some embodiments, a bottom edge 134b of the lower wall 134 may be flush with the bottom opening 137b of the attachment feature 137.

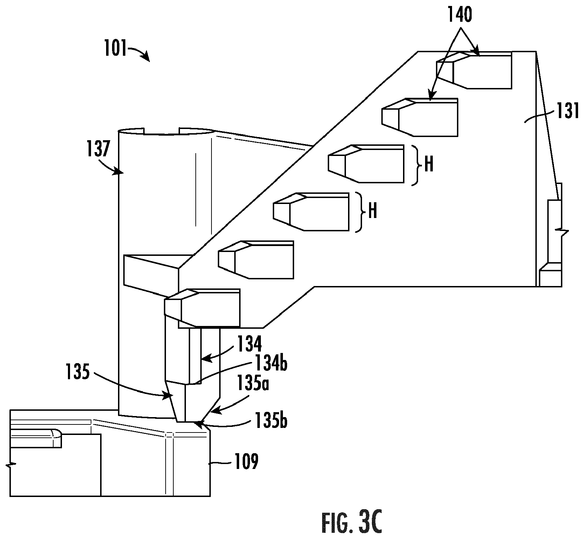

In some embodiments, the body 130 may include a lower protuberance 135. The lower protuberance 135 as illustrated in FIG. 3C may extend below the bottom edge 134b of the lower wall 134. The lower protuberance 135 may partially be flush with the lower wall 134 and define a bottom protuberance surface 135b below the lower wall 134. In some embodiments, a slanted face 135a may extend upwards from the bottom surface 135b. The slanted face 135a may be configured as a ramp to shift the body 130 upwards such that the bottom surface 130b of the body 130 is rotatable above the top surface 103a of the base 103, when the body 130 is rotated from the engaged position to the disengaged position. In some embodiments, slanted face 135a may slide along an internal management system 109, such that in the disengaged position the bottom surface 135b is atop of the internal management system 109.

Returning to FIGS. 3A and 3B, the top surface 130a of the body 130 may include at least one grip feature 132. The grip feature(s) 132 may be formed as a ridge extending upward from the surface 130a. In some embodiments, there are at least two ridges. The two ridges may be perpendicular to one another, or in other embodiments the ridges may be parallel. The ridge(s) 132 may be configured to provide grip to aid in moving the tray blocker device 101 from the engaged position to the disengaged position or vice versa. Additionally, the grip features 132 may provide structural reinforcement for the tray blocker device 101, such as to maintain a desired rigidity.

The body 130 may have an interior wall 131 extending vertically upwards from the interior edge 130c. In some embodiments, a portion of the interior wall 131 may extend slightly below the body 130. The interior wall 131 may be formed perpendicular to the interior edge 130c of the body 131. In some embodiments, the interior wall 131 may extend the entire length of the interior edge 130c, while in other embodiments, the interior wall 131 may extend partially along the length of the interior edge 130c.

In some embodiments, at least one protrusion 140 may extend away from the body 130. More specifically, the at least one protrusion 140 may extend from the interior wall 131. In some embodiments, the protrusion 140 is angled such that the protrusion 140 is not perpendicular to the interior wall 131.

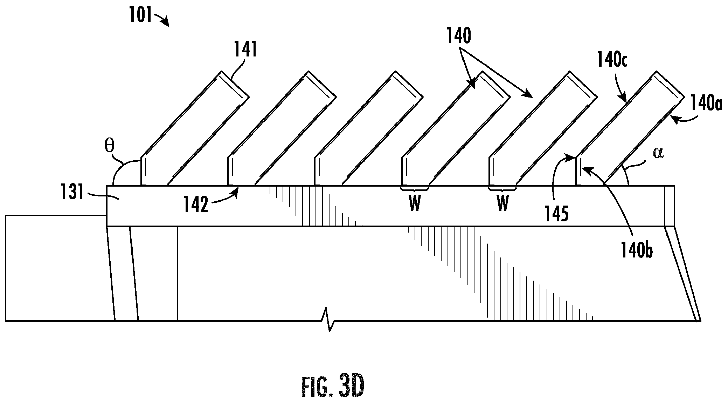

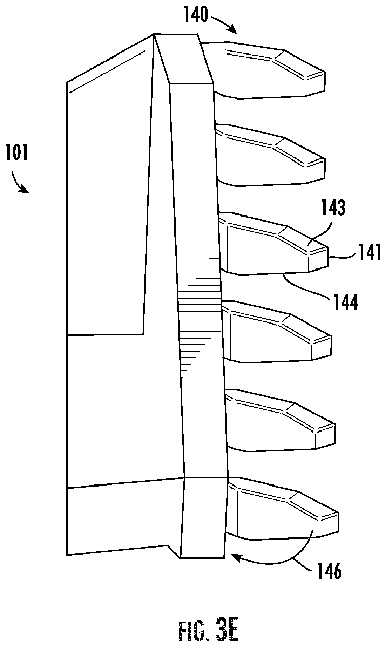

In some embodiments, there may be a plurality of protrusions 140 extending from the interior wall 131. Each of the plurality of protrusions 140 are spaced apart vertically and, in the illustrated embodiment, horizontally (e.g., matching the spacing of the splice trays in the enclosure). In some embodiments, the protrusions 140 are vertically spaced such that there is space between the respective top surface and the bottom surface of adjacent protrusions (see FIG. 3E). Each protrusion 140 may extend from an attachment face 142 to a tip 141 (shown in FIG. 3D). The attachment face 142 may extend from the interior wall 131.

As illustrated in FIGS. 3C-3D, each of the protrusions 140 may define a height H and a width W at the attachment face 142 with the interior wall 131. The height H may be the vertical length of the protrusion, and the width W may be the horizontal length of the protrusion at the attachment face 142. In some embodiments, at the attachment face the height H may be greater than the width W.

The protrusions 140 are formed with a first attachment angle α and a second attachment angle θ. The first attachment angle α may be an acute angle, and the second attachment angle θ may be an obtuse angle, or in some embodiments, a right angle. Such an angular attachment of the protrusion 140 may aid in easier removal of undesired protrusions, such as for configuring accessibility of the splice trays, as detailed herein. The first attachment angle α may be measured between the interior wall 131 and a first side 140a of the protrusion 140. The first side 140a of the protrusion 140 may extend linearly from the attachment face 142 to the tip 141 of the protrusion 140. The second attachment angle θ may be measured between the interior wall 131 and a second side 140b of the protrusion 140. The second side 140b of the protrusion 140 may extend linearly from the attachment face 142, to a bend 145. At the bend 145, the second side 140b may transition to a third side 140c. The third side 140c may extend from the bend 145 to the tip 141 parallel to the first side 140a. In some embodiments, each protrusion 140 may be formed such that the tip 141 is smaller than the attachment face 142. In some embodiments, the height of the protrusion 140 may decrease from the attachment face 142 to the tip 141, and the width of the protrusion 140 may increase from the attachment face 142 to the tip 141. The width of the protrusions 140 may increase along the second side 140b and may be constant after the bend 145 and transition to the third side 140c. The width increase may be configured to induce frangibility at the attachment face 142 and increase surface area engagement between a lower surface 144 of the protrusion 140 and a surface 139 of the splice tray 110. In some embodiments, the lower surface 144 is slanted upward from the attachment face 142 to the tip 141. In some embodiments, the entire lower surface 144 is slanted, and in other embodiments, the slant begins partially along the lower surface 144. Similarly, in some embodiments, an upper surface 143 may be slanted downward from the attachment face 142 towards the tip 141. In some embodiments, the entire upper surface 143 is slanted, and in other embodiments the slant begins partially along the upper surface 143. In some embodiments, the lower surface 144 may have a longer slant than the upper surface 143, while in other embodiments, the slant lengths may be equal. In some embodiments, the lower slant is shallower than the upper slant, and in other embodiments, the slant depth is equal. The corresponding slants of the upper and lower surfaces 143, 144 of the protrusion 140 may aid in positioning the protrusion between splice trays 110 that are spaced vertically, such as when the tray blocker device 101 is moved from the disengaged position to the engaged position. In some embodiments, the protrusions 140 may also bias and/or retain the splice trays 110 in the horizontal position. The lower surface 144 of the protrusions 140 may engage with the surface 130 of the splice trays 140, such that when the tray blocker device 101 is in the engaged position the protrusions 140 block and/or prevent movement of the splice trays 110 between the horizontal and vertical positions.

The tray blocker device 101 may be formed from plastic, such as by injection molding. The molding process may provide a frangible material such that the protrusions 140 are breakaway selectable. As discussed above the height H of each protrusion 140 is greater than the width W at the attachment face 142. The differing sizes allows each protrusion 140 to be frangible in the horizontal direction, while being stable in the vertical direction. In some embodiments, each protrusion 140 may be pressed (e.g., arrow 146) towards the interior wall 131 to break the protrusion 140 off of the interior wall 131. In some embodiments, the tray blocker device 101 may be formed with a number of protrusions 140 corresponding to the number of splice trays 110 to be blocked. Six (6) protrusions 140 are depicted in the present embodiment, however any number of protrusions 140 may be utilized. A user may break off the desired protrusions 140 to customize the accessibility of the splice trays 110.

The tray blocker device 101 may be configured to interact with at least one of a plurality of splice trays 110 within the enclosure 100. FIGS. 4A-4B illustrate the tray blocker device 101 in an engaged position within the base 103 of the enclosure 100. In some embodiments, the tray blocker device 101 is positioned such that the top surface 130a of the body 130 is flush with the top surface 103a of the base 103.

As illustrated in FIG. 4A, the tray blocker device 101 may be attached within the base 103 by a fastener within the attachment feature 137. As illustrated, the attachment feature 137 is positioned in a corner of the base 103 such that the exterior edge 103d is substantially parallel to the base 103, and the interior edge 130c is substantially parallel to the plurality of splice trays 110.

In some embodiments, each protrusion 140 may be configured to engage a surface 139 of each splice tray 110. In some embodiments, the surface 139 may be a corner opposite of a rotation edge 117, illustrated in FIG. 2A, of the splice tray 110 about the ramp 111. In some embodiments, the protrusions 140 may be configured to engage a surface along an edge of the splice tray 110.

In some embodiments, the protrusions 140 prevent access to splice trays 110 below the engaged tray by preventing rotation of the engaged splice tray. For example, when a protrusion 140 is in contact with the surface 139 of a splice tray 110, the contents of the engaged tray is accessible as the contents are housed on the upper surface of the tray. However, the protrusion 140 prevents rotation of the tray, by engaging with the surface 139. In an example embodiment, the enclosure 100 may include a plurality of tray blocker devices 101, such as disposed on either side, or bottom of the splice trays 110. The tray blocker devices 101 may be configured to resist rotation and access of the same splice trays 110, or may be configured to resist rotation and enable access to different splice trays or sets of splice trays. Additionally or alternatively, the plurality of tray blocker devices 101 may be stacked about a common rotation axis A.

As illustrated in FIG. 4B, each of the plurality of protrusions 140 aligns with a surface 139 of the one of the plurality splice trays 110. In some embodiments, the number of protrusions 140 may be equal to the number of splice trays 110, while in some embodiments, the number of protrusions 140 may be less than the number of splice trays 110. For example, the protrusions 140 may engage with the corner surfaces of the upper trays, while the lower trays are uncontacted by one of the protrusions. Further, as noted above, the protrusions 140 can be broken away to engage only certain surfaces (and certain splice trays 110) thereby the lower splice trays 110 are blocked by the engagement of a protrusion 140 with the surface 139 of one or more upper splice trays.

FIG. 5 illustrates a close up view of the attachment feature 137. As illustrated, the attachment feature 137 is substantially cylindrical. In some embodiments, the attachment feature 137 may include a retaining feature 138 integral to the attachment feature 137. The retaining feature 138 may include a projection 138a that may be an over-hang formed within a segment of the attachment feature 137, which extends at least partially over the opening end 137a. The retaining feature 138 may be configured such that a fastener may be retained within a cavity 137c of the attachment feature 137 when loosened from the internal management plate.

The fastener may be loosened to allow the tray blocker device 101 to rotate between the engaged position and the disengaged position about the rotation axis A1. The fastener and the retaining feature 138 may be configured such that the tray blocker device 101 may not accidentally be rotated or removed, thereby preventing unauthorized access at all times.

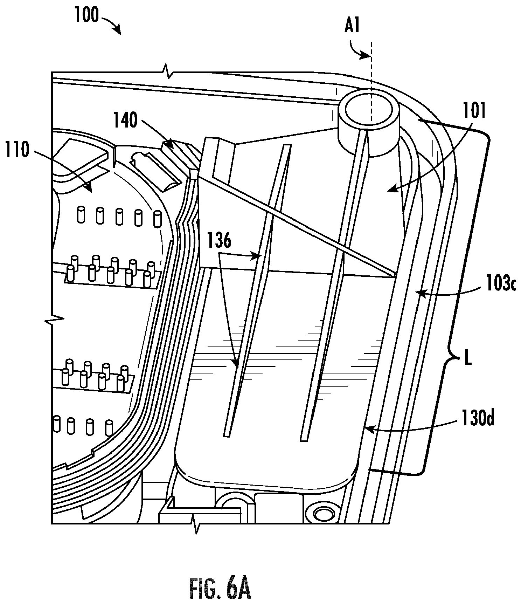

The tray blocker device 101 is further configured to prevent and/or restrict access to the incoming feeder and outgoing distribution cables. As illustrated in Fig. 6A, the body 130 of the tray blocker device 101 has a length L, which extends between the proximal edge 130e and distal edge 130f. The length L of the tray blocker device 101 may be equal to a length of one of the splice trays 110. In some embodiments, the length L of the tray blocker device 101 may be greater than the length of the splice trays 110. In other embodiments, the length L is greater or equal to the length of the splice trays 110.

FIG. 6A illustrates the tray blocker device 101 in the engaged position. As illustrated, the exterior edge 130d of the body 130 is parallel to a wall 103c of the base 103, and the top protrusion 140 is engaged with the surface 139 of the top splice tray 110. Therefore, the contents of the top splice tray 110 would be accessible, and the top protrusion 140 prevents access to the contents of the lower splice trays 110.

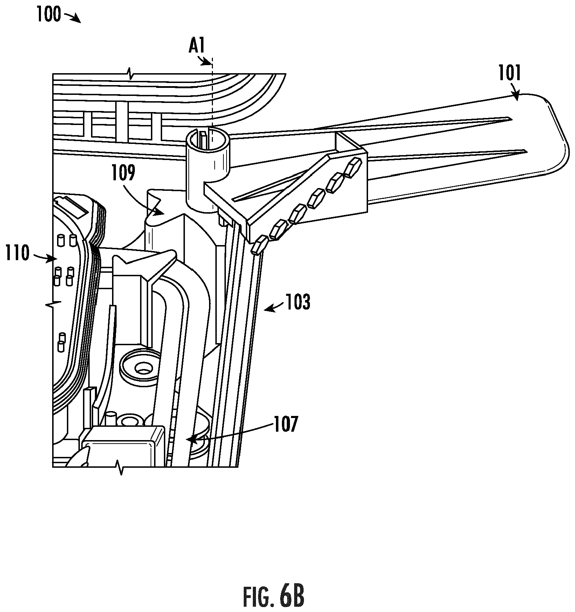

FIG. 6B illustrates the tray blocker device 101 in the disengaged position. In the disengaged position the distribution cables 107 along the bottom of the base 103 are accessible. Further, the protrusions 140 are no longer engaged with the surfaces 139 of the splice trays 110, thereby allowing each of the splice trays 110 to be rotated about the rotation edge, to access the contents of the lower splice trays, and the feeder and distribution cables.

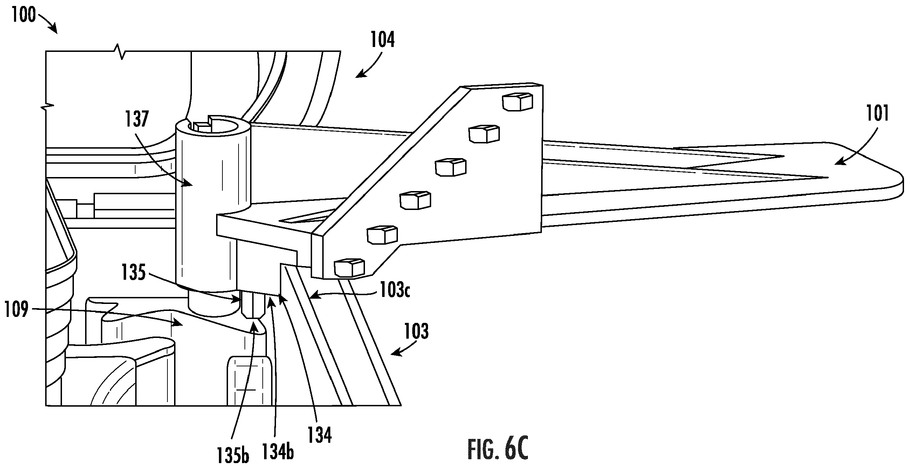

As illustrated in FIG. 6C, the lower protuberance 135 is rotated onto the internal management plate 109, and the lower wall 134 is adjacent to the base 103. When the tray blocker device 101 is moved to the fully disengaged position, the lower wall 134 abuts the wall 103c of the base 103 such that the tray blocker device 101 cannot be rotated further. In some embodiments, the tray blocker device 101 can rotate up to 90 degrees, up to 110 degrees, or up to 130 degrees from the engaged position, or other suitable range of rotation. Any rotation (e.g., 0.5 degrees, 1 degree, or 5 degrees) from the engaged position may be referred to as the "disengaged position," although perhaps not a "fully" disengaged position.

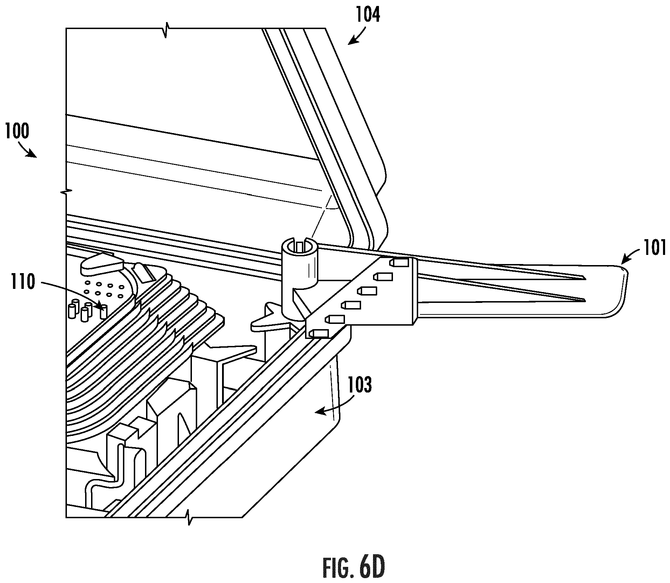

As illustrated in FIG. 6D, the tray blocker device 101 is in the disengaged position. The tray blocker device 101 prevents the enclosure 100 from entering into the closed state, as the tray blocker device 101 forms a mechanical interference between the lid 104 and the base 103.

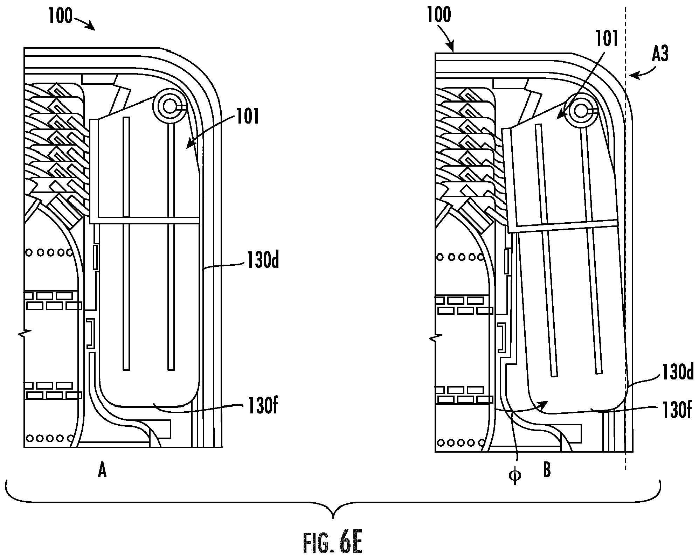

As further illustrated in FIG. 6E, when the tray blocker device 101 is partially rotated out of the engaged positions or "slightly disengaged", the body 130 of the tray blocker device 101 may create a mechanical interference between the lid 104 and the base 103 thereby preventing the enclosure 100 from entering the closed state. Position A illustrates the tray blocker device 101 in the engaged position, wherein the exterior edge 130d is parallel to the base 103 (and the lid can, thus, be closed onto the base 103). Position B illustrates the tray blocker device 101 in a disengaged position wherein the tray blocker device 101 has been rotated about the rotation axis by a rotation angle ϕ. In some embodiments, the rotation angle ϕ may be up to 5 degrees, up to 3 degrees, or up to 1 degree. As illustrated, the rotation angle ϕ shifted the distal edge 130f of the body 130 such that a portion of the exterior edge 130d near the distal end 130f is over the edge of the base 103. As there is a portion of the tray blocker device 101 over the base 103, the tray blocker device 101 is a mechanical interference and may limit or prevent the enclosure 100 from transitioning to the closed state. Therein, a maintainer or user would be informed that the tray blocker device 101 was not fully engaged, e.g. in the engaged position, and the tray blocker device 101 would need to be rotated to the engaged position to enable closing the lid 104 on the base 103.

In some example embodiments, the present invention may include more than one tray blocker device. Each of a first tray blocker device 201 and a second tray blocker device 201' may mirror one another and be used on opposite corners of a plurality of splice trays 210 within an enclosure 200. In some embodiments, each of the first tray blocker device 201 and the second tray blocker device 201' may have a protrusion 240 positioned along the interior wall at a different vertical position thereby to block access to different splice trays 210. This allows for varying accessibility in situations where multiple operators or servicers utilize the same enclosure 200 and require access to some of, but not all of, the plurality of splice trays 210.

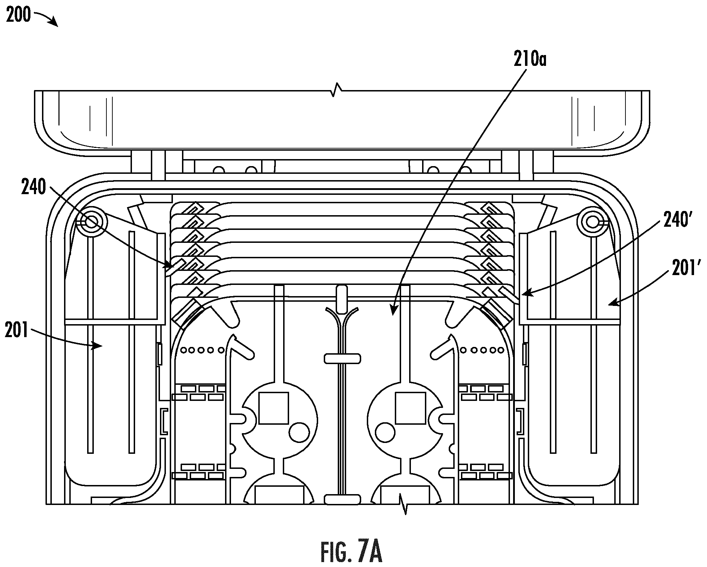

As illustrated in FIG. 7A, the first tray blocker device 201 may be positioned on the left side of the enclosure 200 and may have a first protrusion 240 disposed on a surface of one of the splice trays 210. The second tray blocker device 201' may be positioned on the right side of the enclosure 200 and may have a second protrusion 240' positioned on a surface of a different splice tray 110. Each tray blocker device 201, 201' allows access to a different set of splice trays 101. As illustrated, the second protrusion 240' of the second tray blocker device 201' is engaging a surface of a higher splice tray 210 than the first protrusion 240 of the first tray blocker device 201. As used herein, a "set of trays" refers to the splice trays 210 that are accessible at a given tray blocker device configuration. For example, when both tray blocker devices 201, 201' are engaged, a first set of trays are accessible, when only one tray blocker device is engaged, a second set of trays are accessible, and when neither tray blocker device is engaged a third set of trays are accessible. In the above example a first set of trays would include the upper splice trays 210 above the top protrusion 240, a second set of trays would include the splice trays 210 above the lower protrusion 240', and a third set of trays would include all of the splice trays 210.

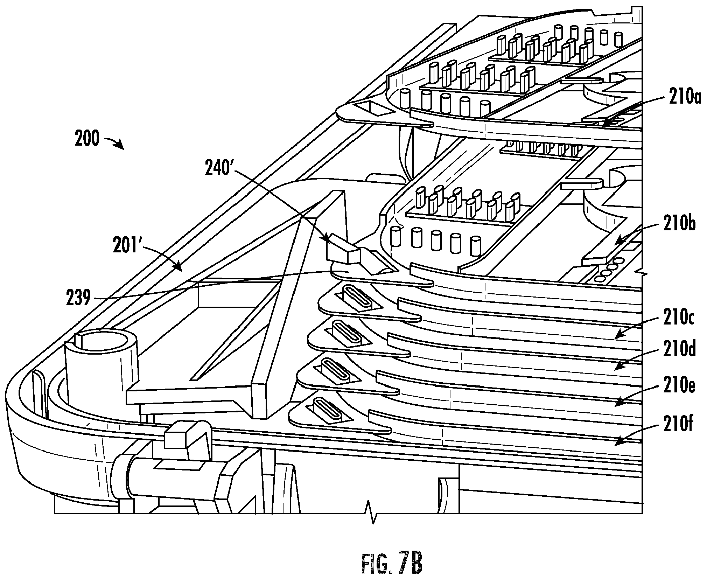

As discussed above, FIGS. 7B-7C illustrate perspective views of the example enclosure and the sets of trays accessible with engagement of each of device 201, 201'. FIG. 7B illustrates a first set of trays 210a-210b which are accessible when either both tray blocker devices 201, 201', or only the second tray blocker device 201' is engaged. The second protrusion 240' engages a surface 239 of the second splice tray 210b (as counted from the top e.g., 210a is the first splice tray, 210b is the second splice tray, etc.). The second protrusion 240' prevents access to the splice trays 210 below the second splice tray 210b, by blocking vertical movement of the second splice tray 210b. Although the second protrusion 240' prevents the movement of the second splice tray 210b, the contents of the second splice 210b tray are accessible, and therefore the second splice tray 210b is included within the first set of trays 210a-210b.

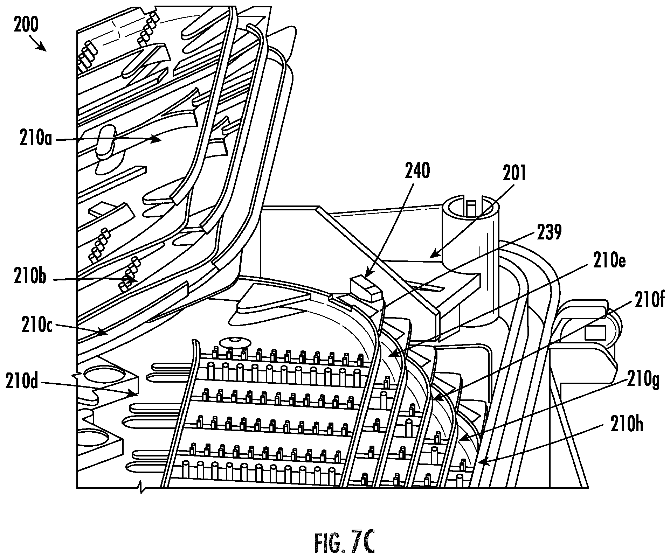

Fig. 7C illustrates an example embodiment, where only tray blocker device is in the engaged position, providing access to a second set of trays. As illustrated the first tray blocker device 201 in the engaged position and the contents of the second set of trays 201a-201d are accessible. Although not illustrated in this embodiment, the second tray blocker device 201' is in the disengaged position, as the second splice tray 210b is lifted. The first protrusion 240 is engaged with the surface 239 of the fourth splice tray 210d. and as such, the contents of the first through fourth splice trays 210a-210d is accessible and defines the second set of trays 210a-210d.

A third set of trays is defined when both the first tray blocker device 201 and the second tray blocker device 201' are in the disengaged position, e.g. all of the splice trays 210a-210h. In the above example, the first set of trays includes the first and second trays 210a, 210b; the second set of trays includes the first through fourth trays 210a-210d; and the third set of trays includes all of the trays within the enclosure, 210a-210h.

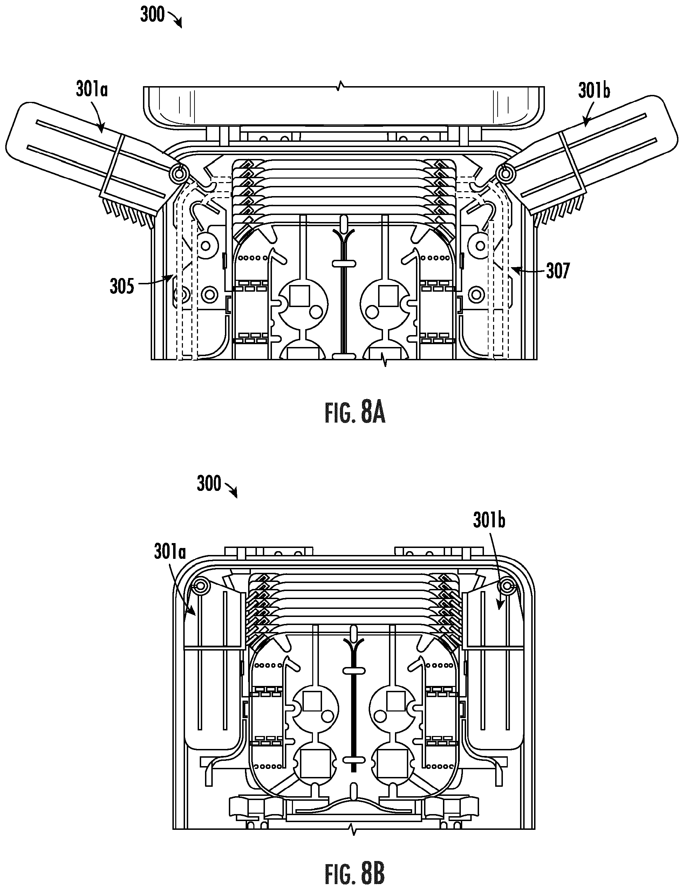

FIGS. 8A-8B illustrate the installation of a first tray blocker device 301a and a second tray blocker device 301b onto an enclosure 300. In some embodiments, an incoming feeder cable 305 and an outgoing distribution cable 307 cables will be installed by the installer. An installer may splice one or more of the incoming cables 305 into smaller distribution drop cables within one of the splice trays. After the initial installation, the installer may install a first tray blocker device 301a, and optionally a second tray blocker device 301b on opposing corners of an internal management plate within the enclosure 300. In some embodiments, the installer may remove one or more protrusions from the tray blocker device to enable access to different sets of trays. The installer may then ensure the splice trays are in the horizontal configuration and rotate the at least one tray blocker device from the disengaged position to the engaged position, wherein each of the protrusions may engage with a surface of a splice tray. In some embodiments, a sloped tip of the protrusion allows for easy movement between the engaged and disengaged positions. Once in the engaged position, the installer may tighten a fastener to secure the device to the internal management plate, and thereby secure the protrusions engagement with the surfaces of the splice trays.

In some example embodiments, one or more of the tray blocker devices 101, 201, 301, may include a locking feature. The locking feature may be configured to resist rotation of the tray blocker device 101, 201, 301 about the rotation axis A1 out of the engaged position. In some example embodiments, the locking feature may be a lock, tamper seal, cable tie, or the like. The body 130 of the tray blocker device 101, 201, 301, and/or the base 103 may include an aperture to accept the locking feature. In some embodiments, the fastener may be utilized as the locking device, by tightening the fastener to prevent rotation of the tray blocker device 101, 201, 301, about the rotation axis A1.

Further, the body of the tray blocker device 301a, 301b may cover at least a portion of the incoming feeder cables 305 and outgoing distribution cables 307 to prevent any unauthorized access and prevent any incidental issues.

### Vertical Guide

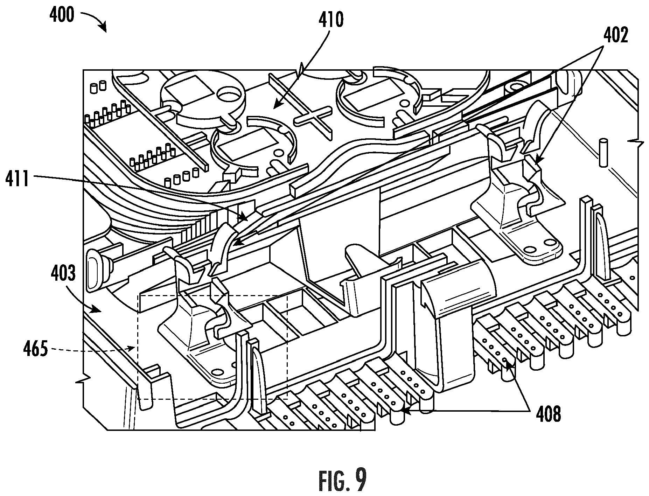

As discussed above, there is a need to guide the drop cables from the splice trays to the openings configured to receive and route the drop cables. As illustrated in FIG. 9, at least one device (e.g., vertical guide 402) may be positioned and secured within an enclosure 400 to provide a constant minimum bend radius and align the fibers without harming the integrity therein. In some embodiments, the vertical guide 402 may be injection molded plastic, to form a rigid device.

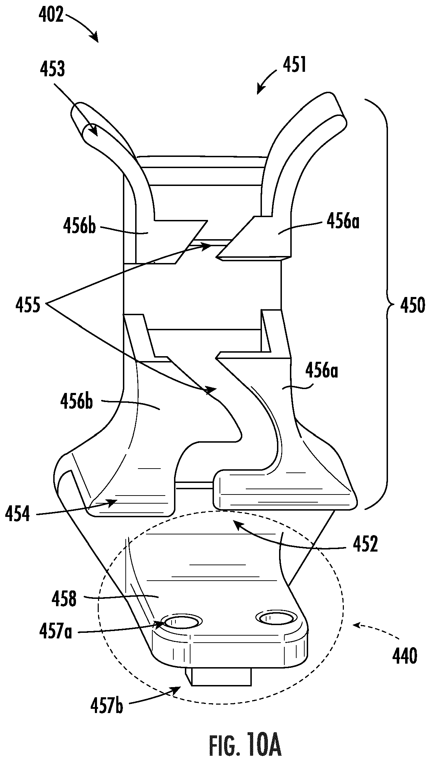

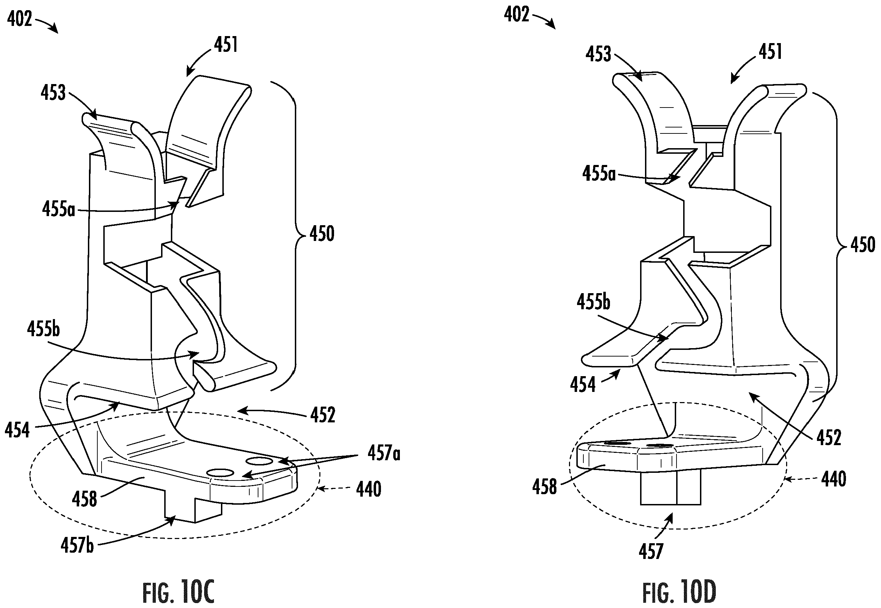

FIG. 9 illustrates a perspective view of a portion of the enclosure 400. A vertical guide 402 is positioned on the side of a ramp 411 which retains a plurality of splice trays 410. An entry end 451, depicted in FIG. 10A, of the vertical guide 402 may be positioned near the upper splice trays 410 retained by the ramp 411.

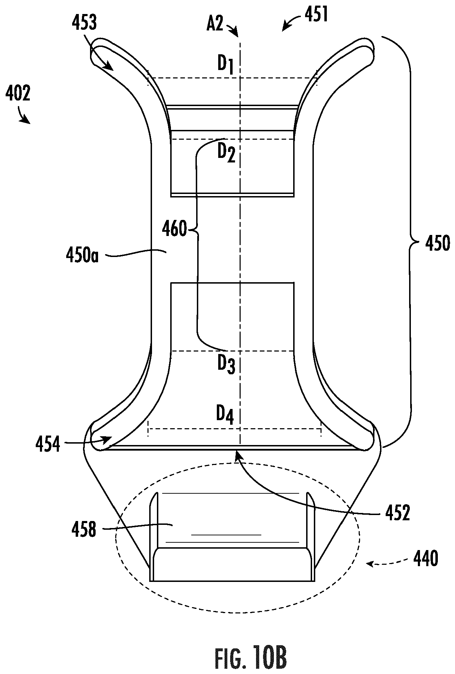

The vertical guide 402 may be configured to receive and retain at least one drop cable. As illustrated in more detail in FIG. 10A, the vertical guide 402 may comprise a body 450 extending from an entry end 451 to an exit end 452 defining a channel 460 extending there between. The channel 460 may define a center axis A2, depicted in FIG. 10B. In some embodiments, the body 450 may be a discontinuous surface extending from the entry end 451 to the exit end 452, such that there may be multiple entry and exit points. In some embodiments, the exit points and entry points may overlap or be one in the same.

The body 450 may have an entry surface 453. In some embodiments, the entry surface 453 may define the entry end 451 of the body 450. In some embodiments, the entry surface 453 may be curved outward from the center axis A2 of the channel 460 thereby defining a decreasing diameter between the entry end and the channel. As illustrated in FIG. 10B, the entry surface 453 may define an entry diameter D₁, and the channel 460 may define a channel diameter D₂. The entry diameter D₁ may be larger than the channel diameter D₂. Although, for simplicity, only two diameters are illustrated in FIG. 10B it should be understood that the entry diameter may decrease from the tip of the entry surface, to the channel.

The body 450 may have an exit surface 454. In some embodiments, the exit surface 454 may extend from the channel 460 to the exit end 452 of the body. The exit surface 454 may be curved away from the center axis A2 of the channel 460 thereby defining an increasing diameter between the channel 460 and the exit end 452. As illustrated in FIG. 10B the exit surface 454 may define an exit diameter D₄, and the channel 460 may define a second channel diameter D₃. The exit diameter D₄ may be larger than the second channel diameter D₃. In some embodiments, the channel 460 has a constant diameter such that the channel diameter D₂, and the second channel diameter D₃ are equal.

Returning to FIG. 10A, in some embodiments, the body 450 may have at least one cut-out 455 extending at least partially between the entry end 451 and the exit end 452. In some embodiments, the cut-out 455 may extend between the entry end 451 and the exit end 452. In some embodiments, the cut-out 455 may be symmetrical, and in other embodiments, the cut-out 455 may be asymmetrical. In some embodiments, the cut-out 455 may be formed such that each edge is configured to be congruent with the other edge.

In some embodiments, the cut-out 455 may be configured to receive and retain one or more drop cables within the channel 460. The cut-outs 455 may be configured such that the drop cables are retained within the channel 460. In this regard, the cut-out 455 may define a size configured to receive a cable therethrough while still leaving a portion 456a, 456b of the vertical guide 402 that prevents a cable within the channel 460 from slipping out. The portions 456a, 456b may form fingers or tabs that resist the removal of the cable from the channel 460. In some embodiments, the portions 456a, 456b may be flexible, such that the cable may be inserted into the channel 460 through the cut-out 455 by flexion of the tabs. Similarly, the portions may generally resist removal of the cable from the channel 460, but flex to enable removal by an operator or servicer, without necessitating navigation of the cut-out 455.

The vertical guide 402 may further include a base 440 positioned below the exit end 452 of the body 450. The base 440 may be connected to the body 450 below the exit end 452. The base 440 may comprise a platform 458 perpendicular to the channel 460.

In some embodiments, the platform 458 may include at least one attachment feature 457. In some embodiments, the attachment feature 457 may be configured as a protrusion 457b on a bottom surface of the platform, and in other embodiments, may be configured as one or more apertures 457a through the platform 458. In some embodiments, both a protrusion and one or more apertures may be used.

FIG. 10B illustrates a cross-sectional view of the vertical guide 402. As illustrated in some embodiments, the body 450 may be continuous from the entry surface 453 to the exit surface 454. In some embodiments, the body defines a posterior portion 450a opposite the cut-outs 455. The posterior portion 450a may extend the length of the channel 460, and in other embodiments, may extend along a center portion of the body 450 between the entry end 451 and the exit end 452. In some embodiments, the entry surface 453 may have reflective symmetry about the center axis A2, while in other embodiments, the entry surface 453 may be continuous about the channel, and the posterior portion 450a.

In some embodiments, the exit surface 454 may be symmetrical about the channel 460. In some embodiments, the exit surface 454 may be two surfaces which may mirror each other. In some embodiments, the exit surface 454 is continuous about the posterior side 450a of the body, while in other embodiments, the posterior side 450a of the body 450 does not have an exit surface. The exit surface 454 may be segmented in the front of the body 450 by the cut-out 455.

In some embodiments, base 440 is fixed to the body 450 on the posterior side 450a. In some embodiments, the platform 458 extending from the base 440 is disposed perpendicular to the channel axis A2.

FIGS. 10C-10D illustrate perspective views of the vertical guide 402. In some embodiments, the cut-out 455 is formed as an upper cut-out 455a and a lower cut out 455b. In some embodiments, the upper cut-out 455a may be simple and configured to easily receive the drop cable. For example, the upper cut-out 455a may be configured as a diagonal opening. In some embodiments, the lower cut-out 455b may be dynamic including curves, or direction changes, to more retain the drop cables as they are directed from the exit end 452 to the exit opening within the enclosure. For example, the lower cut-out may include rounded segments and diagonal segments, as the drop cables will be moved in differing direction upon exiting the vertical guide 402.

The vertical guide 402 may include smoothed surfaces throughout. In some embodiments, all of the corners are rounded. In some embodiments, the corners of the cut-outs 455 are rounded such as to not damage the drop cables as they are moved within the cut-outs.

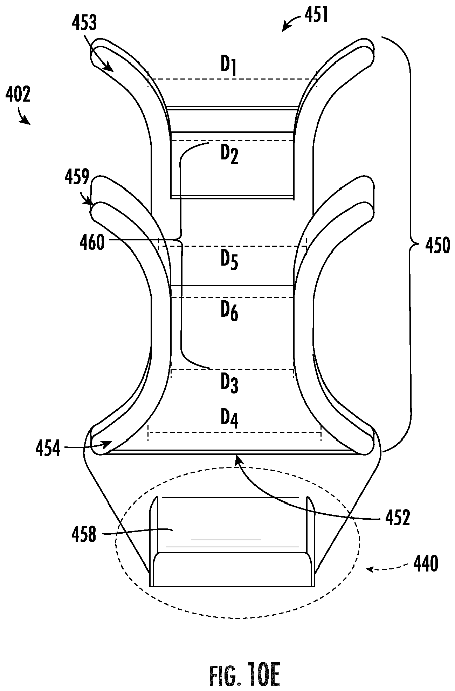

FIG. 10E illustrates an alternative embodiment wherein the vertical guide 402 includes a middle surface 459. The middle surface 459 may be curved outward from the center axis A2 of the channel 460 thereby defining a decreasing diameter between the middle surface 459 and the channel 460. The middle surface 459 may define a diameter D₅, and the channel 460 may define a third channel diameter D₆. The entry diameter D₅ may be larger than the third channel diameter D₆. Although only two diameters are illustrated for simplicity, it should be understood that the entry diameter D₅ is decreasing from the tip of the middle surface 459, to the channel 460. In some embodiments, the channel 460 has a constant diameter such that the each of the channel diameters D₂, the second channel diameter D₄, and the third channel diameter D₆ are equal.

The vertical guide 402 may be secured to the base 403 of the enclosure 400. In some embodiments, the protrusion 457b is placed into a receiving space within the base 403. In some embodiments, the protrusion 457b and the receiving space may form an interference fit to prevent the vertical guide 402 from rotating within the receiving space. For example, the protrusion 457b and the receiving space may have correlating square, hexagonal, quadrilateral, or other polygonal shape. In an example embodiment, the protrusion 457b may include one or more tabs that engage the receiving space in the base 403.

In other embodiments, a fastener is positioned within the aperture 457a of the vertical guide 402 to secure the vertical guide 402 to the base. In some embodiments, the fastener is a screw or similar.

In some embodiments, both apertures 457a are fastened to the base 403, while in other embodiments, a combination of one aperture 457a and the protrusion 457b are used to secure the vertical guide 402 to the base 403. Alternatively, in some embodiments, the body 450 may be configured to be attached to the ramp 411.

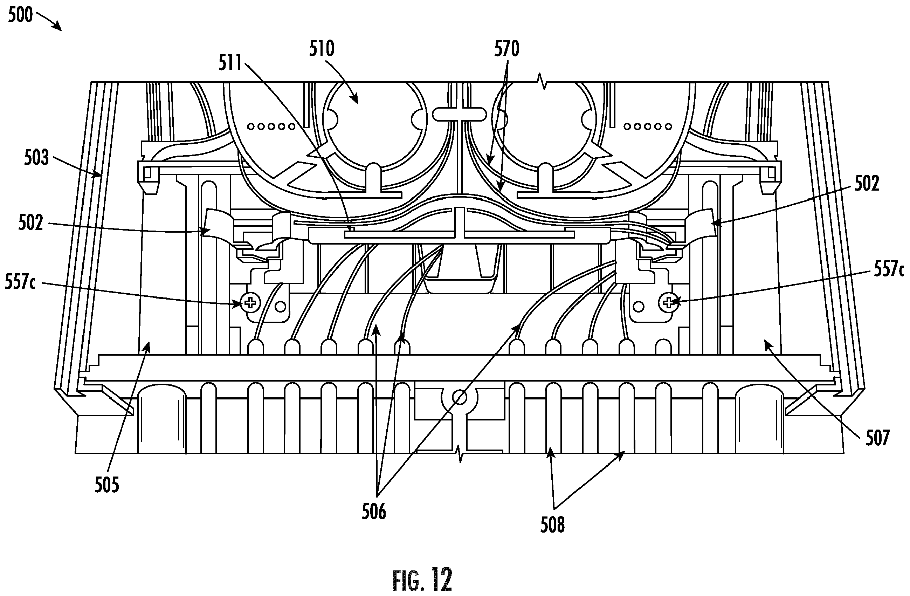

FIG. 12 illustrates a vertical guide 502 in use within an enclosure 500. As illustrated, an incoming cable 505 enters into the enclosure 500, wherein a portion of the outer coating is removed to allow individual fibers 570 to be routed through the enclosure 500 (e.g., to the splice trays 510, or wrapped in the middle section). In some embodiments, a fiber 570 to be spliced is routed into a splice tray 510 by feeding the fiber 570 along the ramp 511 to the desired splice tray 510. As illustrated, the fiber 570 is introduced to the top splice tray 510, on the left ramp, wherein the cable 570 is spliced. After splicing and distribution is complete in the various splice trays 510, the resulting plurality of drop cables 506 are routed through the vertical guide 502 on the right side, and each aligned through an exit opening 508. Although only the right vertical guide 502 is shown routing drop cables 506, the left vertical guide 502 may also be used. In some embodiments, only one vertical guide may be provided.

In some embodiments, not all of the incoming cables 505 are spliced within the enclosure, resulting in some cables being recoated as outgoing cable 507. Within the enclosure 500, two vertical guides 502 may be installed and secured by respective fasteners 557c. As illustrated the fastener 557c is secured within the outer aperture of each vertical guide 502.

In some embodiments, as illustrated in FIG. 2, both the vertical guide 102 and the tray blocking 101 device may be used within the same enclosure 100, thereby increasing the security of the enclosure 100, and increasing the likelihood the cables will be properly maintained and handled.

### Example Flowchart(s) and Operations

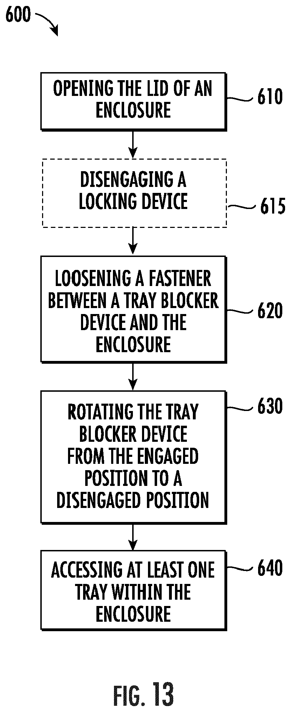

Various examples of the operations performed in accordance with embodiments of the present invention will now be provided with reference to FIGS. 13-15.

FIG. 13 is a flowchart illustrating an example method 600 for accessing a blocked tray, in accordance with some embodiments discussed herein. At operation 610, the lid of an enclosure is opened. At operation 615, a locking device is disengaged, if present. At operation 620, the fastener between the tray blocking device and the enclosure is loosened. At operation 630, the tray blocker device is rotated from an engaged position to a disengaged position. At operation, 640 the at least one splice tray is accessed.

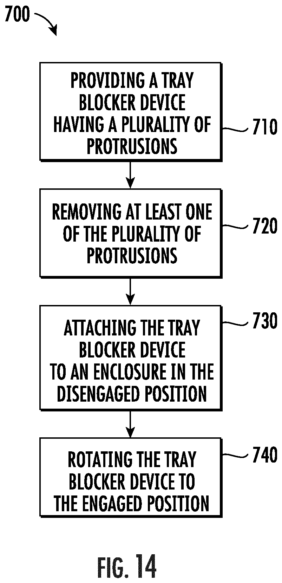

FIG. 14 is a flowchart illustrating an example method 700 for installing a tray blocker within an enclosure, in accordance with some embodiments discussed herein. At operation 710, a tray blocker device is provided, wherein the tray blocker device has a plurality of protrusions. In some embodiments, the tray blocker device may be injection molded. At operation 720, optionally at least one of the plurality of protrusions may be removed. In some embodiments, a protrusion may be removed by shifting the protrusion horizontally until the protrusion is removed. At operation 730, the tray blocker device is secured to the enclosure in the disengaged position. In some embodiments, a fastener may be secured between an attachment feature of the tray blocker device, and an internal management plate within the enclosure. The method 700 may continue at operation 740, where the tray blocker device is rotated from the disengaged position to the engaged position. In some embodiments, the fastener may be tightened after the tray blocker device is in the engaged portion to secure the tray blocker device to the internal management plate and prevent incidental movement.

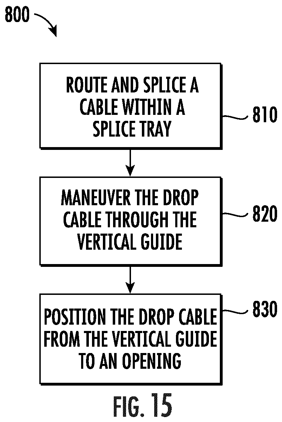

FIG. 15 is a flow chart illustrating an example method 800 for utilizing a vertical guide, in accordance with some embodiments discussed herein. The method may optionally begin at operation 810, where a cable may be routed and spliced within a splice tray. At operation 820, the drop cable may be maneuvered though the vertical guide. In some embodiments, the drop cable may be maneuvered thorough various cut-outs within the vertical guide to position and retain the cable within the vertical guide, and maintain a minimum bend radius. At operation 830, the drop cable may be positioned from the exit end of the vertical guide, to an exit port within an enclosure.

### Conclusion

Many modifications and other embodiments of the inventions set forth herein will come to mind to one skilled in the art to which these inventions pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the invention. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the invention. In this regard, for example, different combinations of elements and/or functions than those explicitly described above are also contemplated within the scope of the invention. Although specific terms are employed herein, they are used in a generic and descriptive sense only and not for purposes of limitation.

## Claims

1. A device for guiding a fiber optic drop cable from a splice tray, the device comprising:
a body extending from an entry end to an exit end and defining a channel therebetween, the body comprising:
an entry surface, wherein the entry surface is curved defining a decreasing diameter from the entry end into the channel;
an exit surface, wherein the exit surface is curved defining an increasing diameter from the channel to the exit end;
at least one cut-out within the body that enables feeding of the fiber optic drop cable therethrough into the channel;
wherein the body is configured to receive the fiber optic drop cable from the splice tray and to maintain a minimum bending radius of the fiber optic drop cable between the splice tray and the exit end, wherein the minimum bending radius corresponds to a change of direction of the fiber optic drop cable below 90°.

2. The device of claim 1, further comprising a base disposed below the exit end, wherein the base comprises a platform extending perpendicular to the channel, and wherein the platform comprises at least one attachment feature.

3. The device of claim 2, wherein the at least one attachment feature comprises a protrusion on a bottom side of the platform.

4. The device of claim 2, wherein the at least one attachment feature comprises at least one hole configured to engage with a fastener.

5. The device of any of claims 1-4, wherein the channel has a constant diameter.

6. The device of any of claims 1-5, wherein the at least one cut-out extends from the entry end to the exit end.

7. The device of any of claims 1-6, wherein the at least one cut-out is configured to retain the fiber optic drop cable within the channel from the entry end to the exit end.

8. The device of any of claims 1-7, wherein the channel comprises an upper cut-out and a lower cut-out, wherein the upper cut-out and the lower cut out have different configurations.

9. The device of claim 8, wherein the lower cut-out is asymmetrical about a channel axis extending between the entry end and the exit end.

10. The device of any of claims 1-9, wherein the channel defines a central portion between the entry end and the exit end, wherein the central portion is open, wherein the body comprises a middle surface extending into the central portion of the channel, wherein the middle surface is curved defining a decreasing diameter between a middle end of the middle surface into the channel.

11. The device of any of claims 1-10, wherein the entry surface comprises a first entry surface and a second entry surface, wherein each of the first entry surface and the second entry surface are convex relative to the channel.

12. The device of claim 11, wherein the first entry surface and the second entry surface are symmetrical about a channel axis extending between the entry end and the exit end.

13. The device of any of claims 1-12, wherein the exit surface comprises a first exit surface and a second exit surface, wherein each of the first exit surface and the second exit surface are convex relative to the channel.

14. The device of any of claims 1-13, wherein the device is injection molded.

15. A fiber optic enclosure comprising:
at least one splice tray within the fiber optic enclosure;
at least one device according to any of claims 1-14 device fixed within the enclosure, wherein the at least one device comprises a first device and a second device, wherein the first device is positioned on a first side of the at least one splice tray, and the second device is positioned on a second side of the at least one splice tray.
